# EUROPEAN PATENT SPECIFICATION

(11) **EP 0 517 224 B1**
(45) Date of publication and mention of the grant of the patent: **25.04.2001**
(21) Application number: 92109478.5
(22) Date of filing: 04.06.1992
(51) Int. Cl.: B62M 23/02, B62M 17/00

(54) **Muscle-operated vehicle**
Muskelgetriebenes Fahrzeug
Véhicule propulsé par la force musculaire

(30) Priority: 04.06.1991 JP 15942591; 04.06.1991 JP 15943091
(43) Date of publication of application: 09.12.1992
(60) Divisional application: 98109549.0
(73) Proprietor: YAMAHA HATSUDOKI KABUSHIKI KAISHA, Iwata-shi Shizuoka-ken, 438 (JP)
(72) Inventor: Takata, Nozomu, Iwata-shi, Shizuoka-ken, 438 (JP)
(74) Representative: Grünecker, Kinkeldey, Stockmair & Schwanhäusser Anwaltssozietät

(56) References cited:
- FR-A- 2 259 741
- US-A- 3 921 741
- US-A- 4 221 275
- PATENT ABSTRACTS OF JAPAN vol. 14, no. 262 (M-981) 6 June 1990 & JP-A-2 074 491 ( MATSUSHITA ELECTRIC WORKS LTD ) 14 March 1990

## Description

The present invention relates to a muscle-operated vehicle, especially bicycle, having a muscle-operated driving system and an electrical power driving system and a control means for controlling the output of the electrical power driving system.

A muscle-operated vehicle comprising the features of the preamble portion of claim 1 is equally known from FR-A-2,259,741, US-A-4,221,275, and US-A-3,921,741. Further, a bicycle is well-known which, in parallel to each other is provided with a muscle-operated driving system for advancing the bicycle by treading upon the foot pedals and with an electrical motor operated driving system wherein it is possible to advance the bicycle through joint operation of both driving systems. Usually the output of the DC motor used in the electrical power driving system is ON-OFF controlled via a manual switch provided at the handle bar or is continuously controlled via a manual accelerator switch. Moreover, a system is well-known from JP-A-2-74 491 which detects the magnitude of the treading force inputted from the foot pedal and varies the driving force of the DC motor according to the increase or decrease of this treading force. I.e. the driving force of the electrical motor is controlled in correspondence to the increase or decrease of the detected muscular driving force which is detected from the input from the foot pedal and, when the muscular load is heavy, the driving force of the electric motor is increased to reduce the muscular load. For such types of bicycles, it is desirable that the driving systems be constructed such that the driving force of one driving system will not affect the other parallel driving system but be transmitted only to the drive wheel, usually the rear wheel of the vehicle. Therefore, it has been conceived to instal a one-way clutch in each of the muscle-operated and electrically powered driving systems as is indicated in JP-A-57-74285.

However, in this case the one-way clutches will be engaged also under operating conditions wherein the bicycle is pushed by walking of the operator. In that case, the one-way clutches will also be engaged when the bicycle is reversed by pushing it back manually and the DC motor and the crank pedals will be rotated backwardly. In such a case, the electrical motor functions as a generator when rotated in its reverse direction of rotation generating a large short-circuit current and causing a great braking force.

For example, when a permanent magnet type DC motor using a permanent magnet as a rotor or stator is rotated reversely, a reverse electrical voltage is generated with a polarity reverse to that of the voltage generated when rotated normally. Normally, in parallel to the motor coil, a fly-wheel diode is connected enabling the flow of an electric current caused by the inductance component while the motor current is intercepted. Thus, when a reverse electric voltage is generated by the reverse rotation of the motor, a large reverse current will make flow through the diode as a short-circuit current by this reverse electric voltage. Therefore, a great braking force will be generated and a great resistance force will be added when reversing the bicycle. This renders the handling of the bicycle inconvenient.

On the other hand, as the auxiliary electrical power driving system is frequently used and controlled to be only supplementary to the driving force generated by the cyclist, the electrical power driving system affects the handling of the bicycle when same is pushed manually by a person walking along, together with the bicycle pushing same. In this case, while walking along pushing the bicycle by hand, no driving force is normally generated by the DC motor as no treading force is generated from the pedal. On the other hand, as the bicycle is equipped with a battery and the DC motor (and some other drive means such as the one-way clutches), it becomes heavier than a conventional bicycle which renders a push-walking of the bicycle cumbersome.

Moreover, as the output of the electrical power driving system is normally only supplementary, there is no power assistance from said electrical driving system upon push-walking the bicycle e.g. when going up a steep slope when the rider must get off, pushing the bicycle by hand. Also in this case, as the bicycle is relatively heavy, considerable effort is required for walking while pushing the bicycle by hand.

In view of the drawbacks of the above mentioned conventional systems, it is an objective of the present invention to provide a muscle - operated vehicle as indicated at the beginning enhancing the capability of manually moving the vehicle backwards by hand.

This technical problem is solved by a muscle - operated vehicle comprising the features of claim 1.

The detecting means is provided to detect an unpowered manual vehicle reversing push-walking drive movement. Said detecting means actuates the electrical power driving system to prevent a short-circuit braking force from being generated through the electrical power driving system upon moving the vehicle manually backwards.

According to a preferred embodiment of the present invention, the closed motor circuit comprises the brake releasing switch connected between the electric motor and a reverse connection of a diode connected in parallel to said electric motor and a reverse control circuit is provided for closing and opening said brake releasing switch when the bicycle is manually advanced or reversed, respectively. This embodiment is advantageous in that the electric motored bicycle which has a muscle-operated driving system and an electric motor-operated driving system provided in parallel to each other wherein the electric motor generates when rotated reversely, a reverse voltage having a reverse polarity in comparison to that when rotated normally, enabling the brake releasing switch to be opened when the bicycle is pushed backwards preventing a large short-circuit brake force from being generated due to the provision of a diode in parallel to the electric motor. Thus, manual handling of the bicycle is facilitated.

Other preferred embodiments of the present invention are laid out in the further sub-claims.

In the following, the present invention is explained in greater detail by a means of two embodiments thereof in conjunction with the associated drawings wherein:
Figure 1 is a conceptional illustration of a bicycle according to the first embodiment,
Figure 2 is a diagram describing the functions of the embodiment as shown in Figure 1,
Figure 3 is a block diagram of the muscle-operated and electrical power driving systems of the embodiment of Figures 1 and 2,
Figure 4 is a conceptional illustration of the second embodiment performing the same purposes as the first embodiment of Figure 1,
Figure 5 is a diagram describing the functions of the second embodiment according to Figure 4,

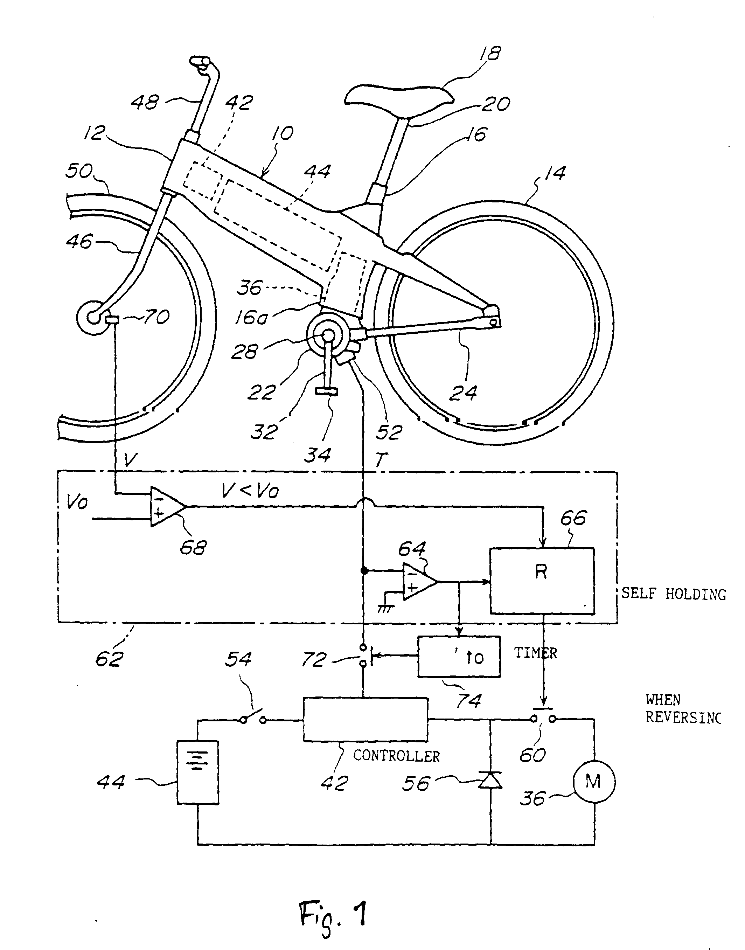

Figure 1 shows schematically an electric motored bicycle as a preferred embodiment of a vehicle having a muscle-operated driving system and an electrical power driving system in parallel thereto.

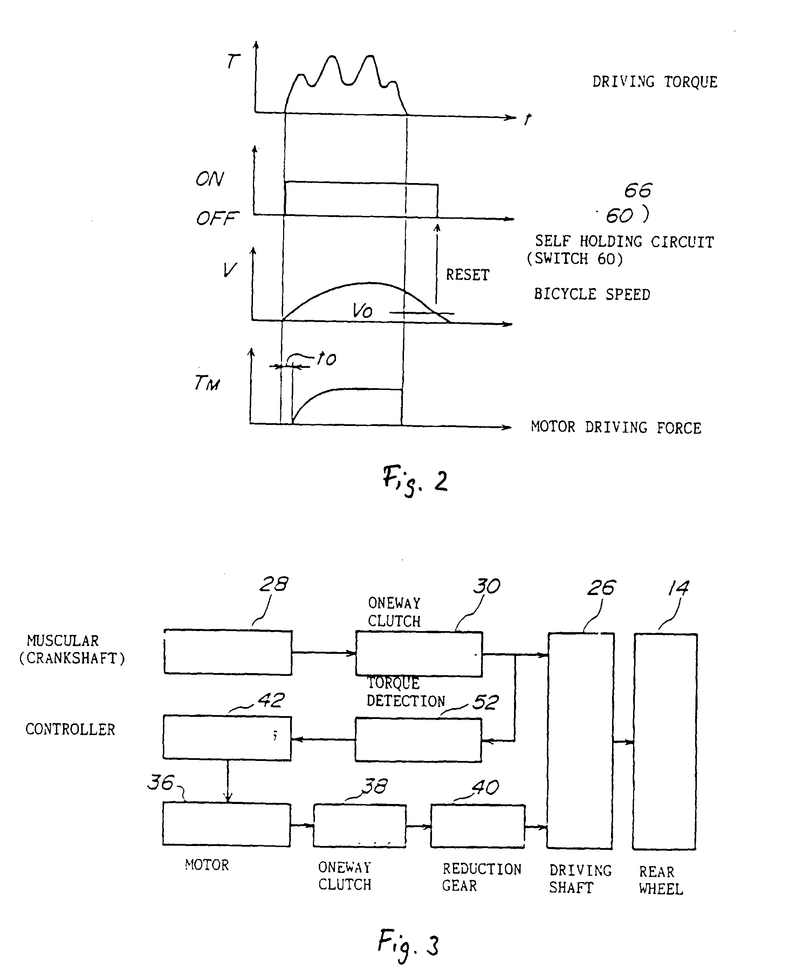

Fig.1 is a conceptional illustration of an embodiment of this invention, Fig.2 is its function describing diagram and Fig.3 is its power system diagram.

In Fig.1, the reference numeal 10 denotes a main frame extended from the head tube 12 aslant downward and rearward to reach the wheel shaft of the rear wheel 14. Near the middle of the main frame 10 is secured a seat tube 16. On the upper and lower portions of the seat tube 16 are installed a seat post 20 holding a saddle 18 and a bottom bracket 22, respectively.

The bottom bracket 22 is connected with the rear end of the main frame 10 through a pair of left and right rear stays 24. The right side rear stay (not shown) has a driving shaft 26 (Fig.3) inserted in it. and the rotation of the crankshaft 28 held by the bottom bracket 22 is transmitted to the rear wheel 14 through a oneway clutch 30 (Fig.3) and the driving shaft 26. That is, a shaft-drive type muscle operated rear wheel driving system is constructed.

On both ends of the crankshaft 28 are fastened cranks 32 on each of which is mounted a foot pedal 34.

In the lower portion of the seat tube 16 is formed a cylindrical motor case 16a in which is accommodated an electric motor 36. The motor 36 is constituted of a brushless DC motor having, for example, a permanent magnet type rotor, the rotating shaft of this rotor is laid generally in parallel with the seat tube 16. The rotation of this rotor is transmitted to the drive shaft 26 and then to the rear wheel 14 through a oneway clutch 38 (Fig.3) and a reduction gearing 40 employing a planetary gear mechanism or the like. Consequently, a driving system operated by a muscular force inputted from the crankshaft 28 and another driving system operated by the motor 36 are provided in parallel to each other.

In Fig.1, the numerals 42 and 44 denote a controller and a chargeable battery, respectively, and these members are accommodated in the main frame 10. The numeral 46 denotes a front fork rotatably held by the head pipe 12, 48 denotes a steering handle bar, and 50 denotes a front wheel mounted on the front fork 46.

The driving force of the motor 36 is controlled according to the muscular driving force, that is, by the treading force on the pedal 34. For example, the driving systems can be of such a structure in which the driving torque T is detected by a torque detector 52 (Fig.3) having a structure for detecting the driving reaction force from in the planetary gear mechanism employed in the muscle operated driving system, and the controller 42 increases or decreases the current into the motor 36 according to the increase or decrease of this driving torque T.

In Fig. 1, the numerals 54 and 56 denote a main switch connected between the battery 44 and the controller 42 and a flywheel diode, respectively. This diode 56 is employed to provide a flow path for the electric current (flywheel current) which continues to flow because of the inductance component of the motor 36 in case the controller 42 intercepted the motor current supplied from the battery 44.

Next are described the brake releasing switch 60 for preventing the motor 36 from generating the braking force and the reverse control circuit 62 for opening/closing this switch 60.

The switch 60 has a normally opened contact connected in the closed motor circuit composed of the motor 36 and the diode 56. The reverse control circuit 62 is provided with a driving torque comparator 64, a self-holding circuit 66 and a bicycle speed comparator 68. When the comparator 64 judged that the output (driving torque) T of the torque detector 52 for detecting the treading force is applied, in other word, that T>0, it outputs an ON signal to the self holding circuit 66. The self holding circuit 66 closes the switch 60 on the basis of this ON signal, and holds this state until it is reset. That is, this state is maintained even if the treading force becomes 0 (T=0).

When the bicycle speed V detected by the bicycle speed sensor 70 installed on the front wheel 50 becomes lower than a set value Vₒ (for example, lower than about 1 km/h), the comparator 68 resets the self holding circuit 66 and, therefore, the switch 60 is opened. This self holding circuit 66 gives the ON signal of the driving torque comparator 64 priority over the reset signal of the bicycle speed comparator 68, and closes the switch 60 when the pedal 38 is treaded even in the state of the bicycle speed V lower than Vₒ. Therefore, this switch 60 is left opened while the bicycle is at rest and is being reversed, and, after the pedal 34 is treaded, is kept closed until the bicycle speed V becomes lower than Vₒ.

The controller 42 in this embodiment functions to start supplying a motor current with a delay of a definite time to after the switch 60 is closed. That is, while a driving torque T is inputted in the controller 42 through the normally opened contact 72, this contact 72 is closed by the output of a timer 74. The timer 74 closes the contact 72 with a delay of time to (about 0.1~0.2 sec) after the ON signal of the comparator 64.

Therefore, the driving force T_{M} of the motor 36 is generated with a delay of the time tₒ after the switch 60 is closed (See Fig.2).

According to this embodiment. while the bicycle is at rest or being reversed, since the driving torque T caused by the pedal 34 is zero, the switch 60 is left opened. When being reversed, although a reverse voltage having a polarity shown in Fig.1 is generated by the motor 36, no short-circuit current flows because no closed circuit is formed. That is, no braking force is generated, and the bicycle can be easily pushed backward.

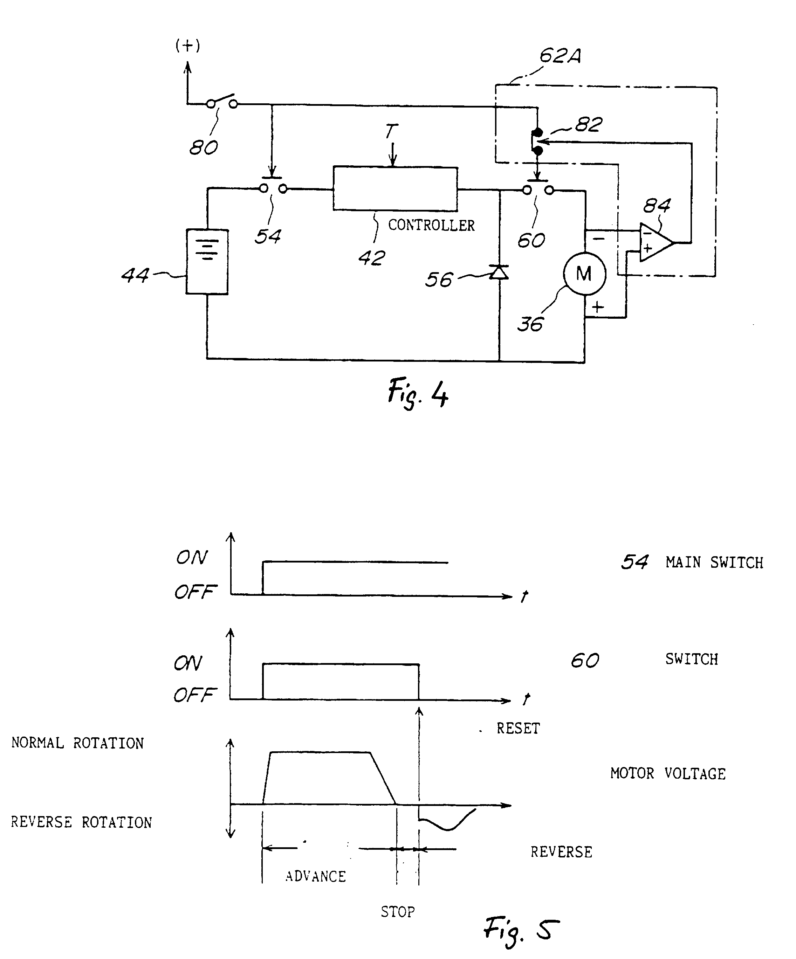

Fig.4 is a conceptional illustration of another embodiment, and Fig.5 is its function describing diagram. The reverse control circuit 62A of this embodiment has a structure in which, while the main switch 54 is opened/closed by a key switch 80, the switch 60 for reverse brake releasing is opened by a current flowing through this key switch 80 and a normally closed contact 82, and this normally closed contact 82 is opened by the output of a comparator 84 for detecting the reverse rotation of the motor 36. That is, since the polarity of the reverse voltage generated by the motor 36 while being rotated reversely (while the bicycle is being reversed) becomes as shown in Fig.4 and is reverse to that of the voltage generated while being rotated normally (while the bicycle is being advanced), this polarity is detected by the comparator 84 and the normally closed contact 82 is opened. Consequently, the switch 60 is opened and the short-circuit current caused by the reverse voltage of the motor 36 is prevented from flowing.

The motor 36 to be used in this invention is not limited to that employing a permanent magnet type stator, but is only required to be a DC motor having a characteristic that the polarity of the reverse voltage generated when rotated reversely is reverse to that of the voltage generated when rotated normally, as is the case with a motor employing a permanent magnet type rotor.

Various methods such as the chopper method, voltage switching method, etc., can be employed as the control method of the controller 42. Further, this invention can be applied not only to bicycles but also to cycles having three or more wheels. This invention can be applied to cycles having its motor and driving wheel directly connected with each other with no oneway clutch provided therebetween.

## Claims

1. Muscle-operated vehicle, especially bicycle, having a muscle-operated driving system (26,28,30,32,34), an electrical power driving system (36) and a control means (42) for controlling the output of the electrical power driving system (36), **characterized in that** detecting means (52,62;62A) are provided to determine the condition that said vehicle is being pushed rearward, said detecting means (52,62;62A) being adapted to open a switch (60) in the circuit of the electrical power driving system (36) for preventing the generation of a short circuit braking force through the circuit of said electrical power driving system (36) when the vehicle is pushed rearward.

2. Muscle-operated vehicle as claimed in claim 1, **characterized in that** the electrical power driving system comprises a DC motor (36) generating a reverse voltage of reversed polarity when the pushing direction of the vehicle is rearward.

3. Muscle-operated vehicle as claimed in claim 2, **characterized in that** the DC motor (36) is provided in a motor circuit comprising a battery (44), a main switch (54) and the control means (42,42a,66).

4. Muscle-operated vehicle as claimed in claim 3, **characterized in that** the motor circuit comprises a diode (56) connected in parallel to a motor coil of the DC motor (36), said motor circuit comprising said brake release switch (60) arranged between a reverse connection of the diode (56) and the DC motor (36).

5. Muscle-operated vehicle as claimed in claim 4, **characterized in that** said brake release switch (60) is controlled by a reverse control circuit (62,62a).

6. Muscle-operated vehicle as claimed in one of claims 3 to 5, **characterized in that** in closing condition of said main switch (54), said brake release switch (60) is closed when the bicycle is advanced, and is opened when the bicycle is being pushed rearward.

7. Muscle-operated vehicle as claimed in claim 5 or 6, **characterized in that** said reverse control circuit (62) comprises a driving torque comparator (64), a self-holding circuit (66) and a vehicle speed comparator (68).

8. Muscle-operated vehicle as claimed in claims 5, 6 or 7, **characterized in that** a delay circuit is provided comprising a timer (74) connected between the driving torque comparator (64) and the self-holding circuit (66) to control a contact (72) of a line which is adapted to input the driving torque (T) to the control means (42).

9. Muscle-operated vehicle as claimed in claim 5 or 6, **characterized in that** the reverse control circuit (62A) comprises a comparator (84) connected to the plus and minus poles of the DC motor (36) for detecting a reverse rotation of said motor (36), said comparator (84) actuates a switch (82) to open the brake release switch (60) of the motor circuit.

10. Muscle-operated vehicle as claimed in at least one of the preceding claims 1 to 9, **characterized in that** the muscle-operated driving system and the electrical power driving system are provided in parallel to each other operating a driving shaft (26) of a rear wheel drive of a bicycle via one-way clutches (30,38) respectively.

## Patentansprüche

1. Muskelkraftbetätigtes Fahrzeug, insbesondere Fahrrad, mit einem muskelkraftbetätigten Antriebssystem (26, 28,30,32,34), einem elektroenergetischen Antriebssystem (36) und einer Steuereinrichtung (42) zur Steuerung der Ausgangsleistung des elektroenergetischen Antriebssystemes (36),
**dadurch gekennzeichnet, daß** Erfassungsmittel (52, 62; 62 A) vorgesehen sind, um den Zustand festzustellen, daß das Fahrzeug rückwärts geschoben wird,
wobei die Erfassungsmittel (52,62; 62A) vorgesehen sind, einen Schalter (60) in dem Schaltkreis des elektroenergetischen Antriebssystemes (36) zu öffnen, um die Erzeugung einer Kurzschluß-Bremskraft durch den Schaltkreis des elektroenergetischen Antriebssystemes (36) zu verhindern, wenn das Fahrzeug rückwärts geschoben wird.

2. Muskelkraftbetätigtes Fahrzeug wie in Anspruch 1 beansprucht, **dadurch gekennzeichnet, daß** das elektroenergetische Antriebssystem (36) einen Gleichstrommotor (36) aufweist, der eine entgegengesetzte Spannung von entgegengesetzter Polarität erzeugt, wenn die Schieberichtung des Fahrzeuges rückwärts ist.

3. Muskelkraftbetätigtes Fahrzeug wie in Anspruch 2 beansprucht, **dadurch gekennzeichnet, daß** der Gleichstrommotor (36) in einem Motorschaltkreis vorgesehen ist, mit einer Batterie (44), einem Hauptschalter (54) und der Steuereinrichtung (42, 42 a, 66).

4. Muskelkraftbetätigtes Fahrzeug wie in Anspruch 3 beansprucht, **dadurch gekennzeichnet, daß** der Motorschaltkreis eine Diode (56) aufweist, die parallel zu einer Motorwicklung des Gleichstrommotors (36) angeschlossen ist, wobei der Motorschaltkreis den Bremsfreigabeschalter (60) aufweist, angeordnet zwischen einem Sperranschluß der Diode (56) und dem Gleichstrommotor (36).

5. Muskelkraftbetätigtes Fahrzeug wie in Anspruch 4 beansprucht, **dadurch gekennzeichnet, daß** der Bremsfreigabeschalter (60) durch einen Rückwärtssteuerschaltkreis (62, 62a) gesteuert wird.

6. Muskelkraftbetätigtes Fahrzeug wie beansprucht in einem der Ansprüche 3 bis 5, **dadurch gekennzeichnet, daß** in geschlossenem Zustand des Hauptschalters (54), der Bremsfreigabeschalter (60) geschlossen ist, wenn das Fahrrad vorwärts bewegt wird, und geöffnet ist, wenn das Fahrrad rückwärts geschoben wird.

7. Muskelkraftbetätigtes Fahrzeug, wie beansprucht in Anspruch 5 oder 6, **dadurch gekennzeichnet, daß** der Rückwärtssteuerschaltkreis (62) einen Antriebsdrehmoment-Komparator (64), einen Selbsthalteschaltkreis (66) und einen Fahrzeuggeschwindigkeits-Komparator (68) aufweist.

8. Muskelkraftbetätigtes Fahrzeug, wie beansprucht in den Ansprüchen 5, 6 oder 7, **dadurch gekennzeichnet, daß** ein Verzögerungsstromkreis vorgesehen ist, mit einem Zeitgeber (74), angeschlossen zwischen dem Antriebsdrehmoment-Komparator (64) und dem Selbsthalteschaltkreis (66), um einen Kontakt (72) einer Leitung zu steuern, die vorgesehen ist, das Antriebsdrehmoment (T) in die Steuereinrichtungen (42) einzugeben.

9. Muskelkraftbetätigtes Fahrzeug, wie beansprucht in Ansprüchen 5 oder 6, **dadurch gekennzeichnet, daß** der Rückwärtssteuerschaltkreis (62A), aufweist einen Komparator (84), verbunden mit dem Plus- und Minuspol des Gleichstrommotors (36) zum Erfassen einer Rückwärtsdrehung des Motors (36), wobei der Komparator (84) einen Schalter (82) betätigt, um den Bremsfreigabeschalter (60) des Motorstromkreises zu öffnen.

10. Muskelkraftbetätigtes Fahrzeug, wie in mindestens einem der vorangehenden Ansprüche 1 bis 9 beansprucht, **dadurch gekennzeichnet, daß** das muskelkraftbetätigte Antriebssystem und das elektroenergetische Antriebssystem parallel zueinander angeordnet sind, und eine Antriebswelle (26) eines Hinterradantriebes eines Fahrrades jeweils über Freilaufkupplungen (30, 38) betätigen.

## Revendications

1. Véhicule propulsé par la force musculaire, spécialement bicyclette, ayant un système d'entraînement propulsé par la force musculaire (26, 28, 30, 32, 34), un système d'entraînement par énergie électrique (36) et un moyen de commande (42) pour commander la puissance du système d'entraînement par énergie électrique (36), caractérisé en ce que des moyens de détection (52, 62 ; 62A) sont prévus pour déterminer la condition où ledit véhicule est poussé en arrière, lesdits moyens de détection (52, 62 ; 62A) étant adaptés pour ouvrir un commutateur (60) situé dans le circuit du système d'entraînement par énergie électrique (36), afin d'empêcher la génération d'une force de freinage en court-circuit dans le circuit dudit système d'entraînement par énergie électrique (36) lorsque le véhicule est poussé en arrière.

2. Véhicule propulsé par la force musculaire selon la revendication 1, caractérisé en ce que le système d'entraînement par énergie électrique comprend un moteur à courant continu (36) qui génère une tension indirecte de polarité inverse lorsque le sens de poussée du véhicule est en arrière.

3. Véhicule propulsé par la force musculaire selon la revendication 2, caractérisé en ce que le moteur à courant continu (36) est prévu dans un circuit de moteur comprenant une batterie (44), un commutateur principal (54) et les moyens de commande (42, 42a, 66).

4. Véhicule propulsé par la force musculaire selon la revendication 3, caractérisé en ce que le circuit de moteur comprend une diode (56) connectée en parallèle à une bobine de moteur du moteur à courant continu (36), ledit circuit de moteur comprenant ledit commutateur de décharge de frein (60) disposé entre une connexion inverse de la diode (56) et le moteur à courant continu (36).

5. Véhicule propulsé par la force musculaire selon la revendication 4, caractérisé en ce que ledit commutateur de décharge de frein (60) est commandé par un circuit de commande inverse (62, 62a).

6. Véhicule propulsé par la force musculaire selon l'une des revendications 3 à 5, caractérisé en ce que dans un état fermé dudit commutateur principal (54), ledit commutateur de décharge de frein (60) est fermé lorsque la bicyclette est avancée, et est ouvert lorsque la bicyclette est poussée en arrière.

7. Véhicule propulsé par la force musculaire selon la revendication 5 ou 6, caractérisé en ce que ledit circuit de commande inverse (62) comprend un comparateur de couple d'entraînement (64), un circuit d'auto-maintien (66) et un comparateur de vitesse du véhicule (68).

8. Véhicule propulsé par la force musculaire selon les revendications 5, 6 ou 7, caractérisé en ce qu'un circuit de temporisation est prévu qui comprend une minuterie (74) connectée entre le comparateur de couple d'entraînement (64) et le circuit d'auto-maintien (66) pour commander un contact (72) de ligne qui est adapté pour entrer le couple d'entraînement (T) vers les moyens de commande (42).

9. Véhicule propulsé par la force musculaire selon la revendication 5 ou 6, caractérisé en ce que le circuit de commande inverse (62A) comprend un comparateur (84) connecté aux pôles plus et moins du moteur à courant continu (36) pour détecter une rotation inverse dudit moteur (36), ledit comparateur (84) actionne un commutateur (82) pour ouvrir l'interrupteur de décharge de frein (60) du circuit de moteur.

10. Véhicule propulsé par la force musculaire selon l'une au moins des revendications précédentes 1 à 9, caractérisé en ce que le système d'entraînement propulsé par la force musculaire et le système d'entraînement par énergie électrique sont prévus parallèlement l'un à l'autre en actionnant un axe d'entraînement (26) d'un entraînement de roue arrière d'une bicyclette par l'intermédiaire d'embrayages unidirectionnels (30, 38) respectivement.
